**Europäisches Patentamt**

**European Patent Office**

**Office européen des brevets**

(19)

(11) Numéro de publication: **0 013 848**
**B2**

(12) **NOUVEAU FASCICULE DE BREVET EUROPÉEN**

(45) Date de publication du nouveau fascicule du brevet:
02.07.86

(51) Int. Cl.⁴: **B 23 B 25/00,** B 23 Q 7/04,
B 23 Q 1/20

(21) Numéro de dépôt: 79400985.2

(22) Date de dépôt: 07.12.79

(54) **Tour à commande numérique avec chargeur automatique de pièces.**

(30) Priorité: **09.01.79 FR 7900398**

(43) Date de publication de la demande:
**06.08.80 Bulletin 80/16**

(45) Mention de la délivrance du brevet:
**27.10.82 Bulletin 82/43**

(45) Mention de la decision concernant l'opposition:
**02.07.86 Bulletin 86/27**

(84) Etats contractants désignés:
**BE CH DE GB IT**

(56) Documents cité:
**BE-A-561 921**
**DE-A-2 031 219**
**DE-A-2 249 441**
**DE-A-2 655 913**
**DE-A-2 707 662**
**DE-B-1 233 696**
**DE-B-2 614 003**
**US-A-3 575 302**

**"Werkstatt und Betrieb" 105 (1972) pages 741, 742**
**"ZWF" 70, pages 225, 226**
**Betriebsanleitung "Index GU 1000 NC" novembre**
**1975, Index-Werken KG Hahn & Tessky, D-7300**
**Esslingen**

(73) Titulaire: **H. ERNAULT- SOMUA Société dite:, 32,**
**avenue de l'Europe, F-78140 Vélizy- Villacoublay**
**(FR)**

(72) Inventeur: **Dolder, André, 214, rue de Courcelles,**
**F-75017 Paris (FR)**

(74) Mandataire: **Loriot, Jacques, c/o SA. FEDIT-**
**LORIOT 38, avenue Hoche, F-75008 Paris (FR)**

EP 0 013 848 B2

## Description

L'invention concerne les tours à commande numérique avec chargeur automatique de pièces et, d'une manière plus précise, les tours équipés d'une broche horizontale porte-pièce, ainsi que d'un premier chariot porte-outils dont les déplacements sont assurés par des organes placés sous le contrôle d'une commande numérique et d'un second chariot qui porte un dispositif automatique de chargement de pièces à usiner et de déchargement de pièces usinées que, pour simplifier, on appellera chargeur dans ce qui suit, ces deux chariots étant montés à coulissement sur des glissières horizontales distinctes parallèles à l'axe de la broche rotative horizontale.

On connaît déjà des machines de ce genre (par exemple d'après le brevet DE-A- 2 249 441) qui sont équipées d'un chargeur automatique de pièces. Mais, dans ces machines les moyens de commande des déplacements du second chariot porte-chargeur sont constitués par un vérin hydraulique dont l'alimentation et la mise à la purge sont assurées par l'intermédiaire d'une électro-vanne. Or, une telle installation est relativement compliquée et onéreuse pour plusieurs raisons; elle nécessite une pompe à gros débit pour alimenter le vérin, car les déplacements du chariot doivent pouvoir être effectués rapidement; elle comporte des butées et des interrupteurs de fins de course dont les emplacements doivent pouvoir être réglés à volonté; et elle doit aussi être munie de moyens propres à produire des ralentissements et des amortissements au voisinage des fins de course, avec des étranglements dans les circuits hydrauliques et des moyens pour faire entrer ceux-ci en jeu aux moments opportuns.

On connaît aussi, d'après le brevet DE-PS 27 07 662, des tours à broche horizontale porte-pièce équipés de deux glissières parallèles à la broche et sur lesquelles sont respectivement montés un chariot principal d'usinage et un chariot auxiliaire qui sert à retourner des pièces semi-usinées et à évacuer les pièces usinées. Ces deux chariots sont déplacés sur leurs glissières respectives par des moyens de commande individuels indépendants l'un de l'autre. De plus, le chariot d'usinage est équipé d'une pince complémentaire qui, en coopération avec une pince principale-portée par le chariot auxiliaire, facilite la prise et le maniement des pièces et, afin que ces deux pinces puissent être déplacées en parfait synchronisme, il est prévu des moyens pour atteler temporairement les deux chariots l'un à l'autre.

Le tour connu en question est relativement compliqué, dans sa structure et dans le contrôle de ses cycles d'usinage, puisque le chariot auxiliaire se trouve entraîné, à certains moments, par ses moyens de commande individuels et, à d'autres moments, par le chariot principal auquel il est temporairement attelé.

Le but de l'invention est de réaliser un tour du genre en question qui ne présente pas les inconvénients précités des tours connus rappelés plus haut. A cet effet le tour équipé d'une broche rotative horizontale porte-pièce, ainsi que d'un premier chariot porte-outils dont les déplacements sont assurîs par des organes placés sous le contrôle d'une commande numérique et d'un second chariot qui porte un dispositif automatique de chargement de pièces à usiner et de déchargement de pièces usinées, ces deux chariots étant montés à coulissement sur des glissières horizontales distinctes parallèles à l'axe de la broche rotative horizontale porte-pièce, le second chariot portant un système de verrouillage placé sous le contrôle de la commande numérique et adapté pour coopérer dans une première position avec une gâche (42) solidaire du premier chariot pour rendre ce second chariot temporairement solidaire du premier, est caractérisé en ce que le système de verrouillage est un système à deux positions de verrouillage à commande unique adapté pour coopérer dans la deuxième position avec une gâche fixe pour immobiliser temporairement le second chariot.

Ainsi, grâce à cette structure particulière, on réalise, par des moyens très simples, un entraînement du chariot auxiliaire à partir du mouvement du chariot principal, c'est-à-dire qu'on fait l'économie totale de moyens d'entraînement individuels pour le chariot auxiliaire, tout en pouvant réaliser, en cycle automatique, une manipulation complète des pièces, tant brutes qu'usinées, au moyen du seul chargeur porté par le chariot auxiliaire. En outre, étant donné que le système de verrouillage servant à l'attelage temporaire des deux chariots est du type à deux positions,de préférence à verrou unique porté par le chariot auxiliaire et dont les deux extrémités sont adaptées à coopérer, respectivement, avec une gâche solidaire du chariot principal et avec une gâche fixe, on dispose d'une moyen très simple et d'une fiabilité absolue pour amener et immobiliser le chariot auxiliaire porte-chargeur dans une position d'attente prédéterminée sur le banc, ce qui facilite grandement l'établissement et la réalisation sûre des cycles de fonctionnement de la machine. Enfin, la précision des déplacements du chariot auxiliaire porte-chargeur est très grande, puisqu'elle bénéficie de celle de la commande numéerique de la machine chargée, entre autres, de contrôler les déplacments du chariot principal d'usinage auquel le chariot auxiliaire est temporairement attelé pour ses déplacements. L'invention sera mieux comprise à la lecture de la description qui va suivre et à l'examen des dessins annexés qui montrent, à titre d'exemple, un mode de réalisation de l'invention appliqué à un tour de commande numérique.

Sur ces dessins:

la figure 1 est une vue de face du tour;

la figure 2 est une vue de profil du tour observé dans la direction de la flèche 11 de la figure 1;

la figure 3 représente, de profil, à plus grande échelle, la liaison entre les deux chariots représentée sur la figure 2; et

la figure 4 montre, également de profil et à plus grande échelle, le dispositif de commande du chargeur.

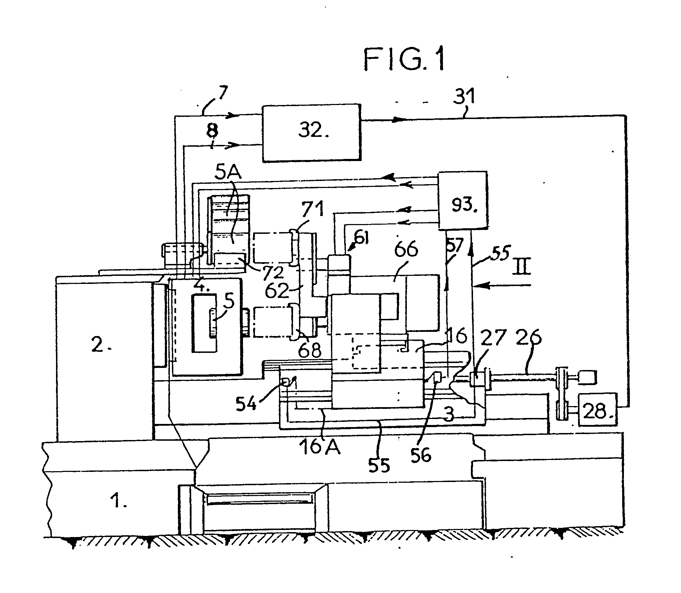

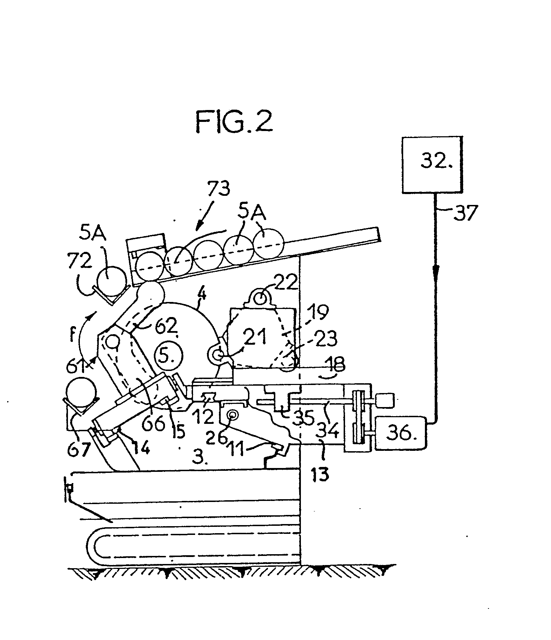

Le tour à commande numérique représenté sur les figures 1 et 2 comporte un bâti 1 qui supporte une poupée 2 et un banc 3. Dans la poupée 2 est montée la broche (non représentée) qui supporte le mandrin 4 dans lequel on fixe les pièces à usiner 5. Le banc 3 est muni de glissières 11, 12, sur lesquelles coulisse un premier chariot porte-outils 13 et de glissières 14, 15 parallèles aux glissières 11, 12 et sur lesquelles coulisse un second chariot porte-chargeur 16. Sur le premier chariot 13 est montée une coulisse transversale 18 qui porte une tourelle 19 à axe horizontal sur laquelle sont montés les outils 21, 22, 23, au nombre de trois dans l'exemple.

Les déplacements du premier chariot 13 sont assurés par un système à vis 26 et écrou 27 actionné par un moteur 28 relié, par des câbles 31, à une commande numérique désignée dans son ensemble par 32. D'une manière analogue, les déplacements de la coulisse 18 sont assurés par un autre système à vis 34 et écrou 35 actionné par un moteur 36 relié aussi par des câbles 37 à ladite commande numérique 32. Le mandrin 4 est équipé de deux interrupteurs (non représentés) de fins de course de serrage et de desserrage reliés respectivement, par deux conducteurs 7 et 8, à la commande numérique 32.

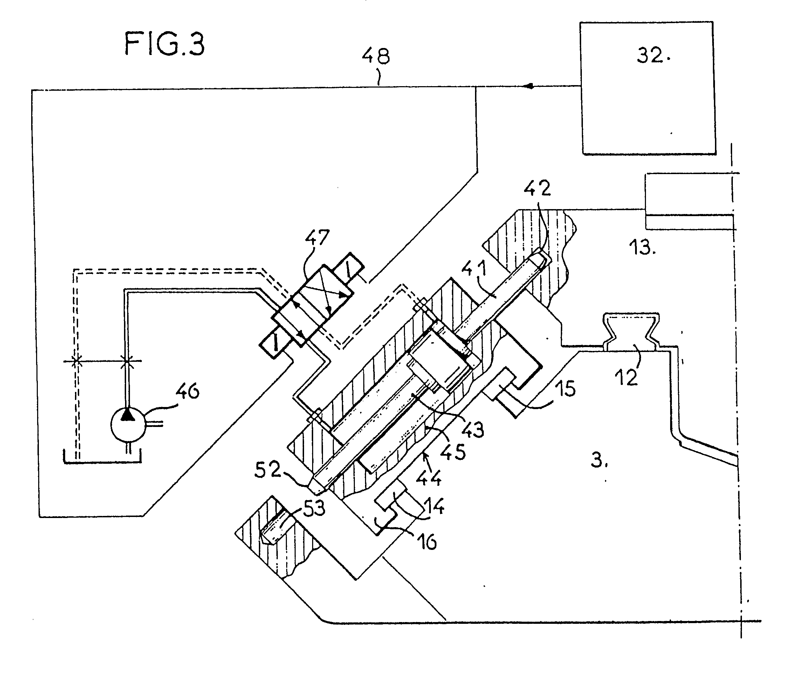

Les déplacements du second chariot porte-chargeur 16 sont assurés à partir de ceux du premier chariot porte-outils 1 3, grâce au fait que l'on peut atteler les deux chariots l'un à l'autre. A cet effet, il existe une liaison libérable constituée par un verrou 41 (voir aussi figure 3) porté par le second chariot 1 6 et pouvant s'engager dans une gâche 42 appartenant au premier chariot 13. Le verrou 41 est solidaire d'une extrémité de la tige de piston 43 d'un vérin hydraulique 44 dont le cylindre 45 est fixé sur le second chariot 16. L'alimentation à partir d'une pompe 46 et la purge de ce vérin sont assurées par une électrovanne 47 dont le circuit électrique de commande 48 est relié à la commande numérique 32. L'autre extrémité de la tige de piston 43 du vérin porte un autre verrou 52 qui peut s'engager dans une gâche 53 solidaire du banc 3 du tour, de manière que le chariot porte-chargeur 16 puisse être immobilisé positivement dans une position d'attente éloignée de la zone de travail des outils pendant que s'effectue une opération d'usinage sur une pièce montée dans le mandrin 4.

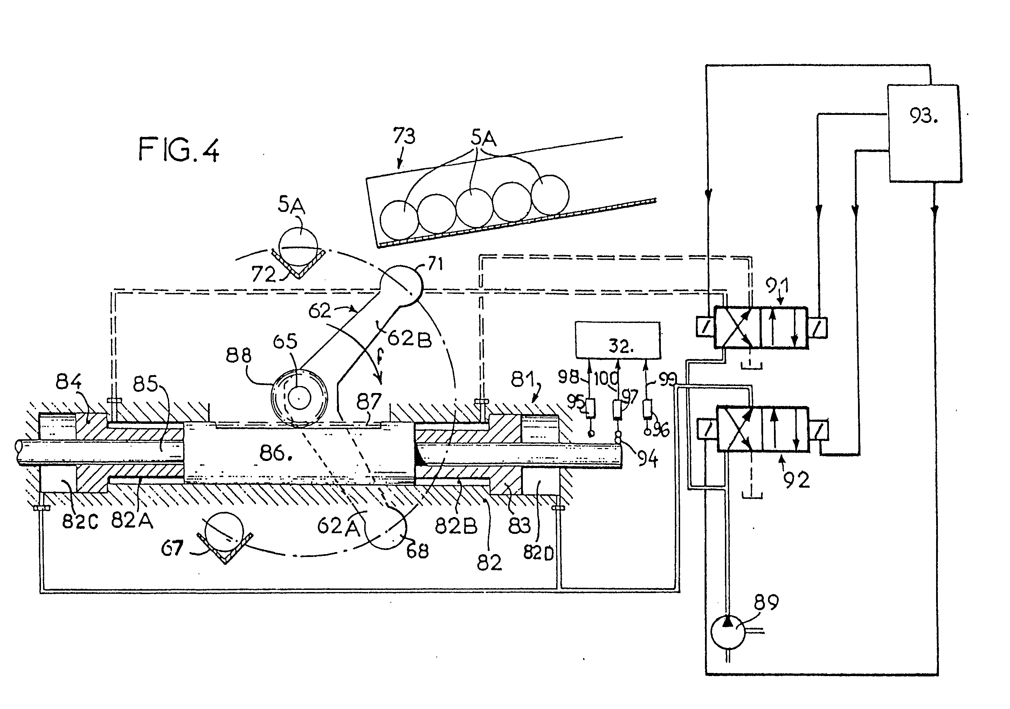

Le chargeur, désigné dans son ensemble par 61, est constitué essentiellement par un levier 62 à deux bras 62A, 62B (voir aussi figure 4) monté à pivotement, par un arbre 65, sur un support 66 fixé sur le chariot porte-chargeur 16. L'axe de l'arbre 65 est un axe horizontal parallèle à l'axe de la broche du tour et par conséquent parallèle aussi aux glissières sur lesquelles coulissent les deux chariots. Le bras 62A porte une pince 68 destinée à saisir les pièces usinées 5 dans le mandrin 4 et à les déposer dans une goulotte d'évacuation 67 disposée à l'avant du tour, tandis que l'autre bras 628 du chargeur porte une pince 71 destinée à saisir les pièces brutes dans une goulotte d'attente 72 et à les engager dans le mandrin porte-pièces 4. Sur la goulotte d'attente 72 débouche un magasin 73 de pièces brutes 5A de tout type classique approprié qui ne sera pas décrit en détail ici.

Le levier à deux bras 62 peut occuper sélectivement trois positions angulaires distinctes, à savoir: une position intermédiaire d'attente qui est celle représentée sur les dessins, une positon de prise de pièces pour laquelle ses deux pinces 68 et 71 sont alignées, respectivement, sur l'axe du mandrin 4 et sur l'axe de la goulotte d'attente 72, et une position de dépose de pièces pour laquelle ses deux pinces 68 et 71 sont alignées cette fois, respectivement, sur la goulotte d'évacuation 67 et sur l'axe du mandrin 4.

Les mouvements de pivotement du levier à deux bras 62 du chargeur sont assurés par un vérin hydraulique double 81 (figure 4) porté par le support 66 et dans le cylindre 82 duquel sont montés deux pistons différentiels 83, 84 qui sont guidés par une tige centrale 85 montée à coulissement dans le cylindre par ses deux extremités et par sa partie centrale 86, de plus gros diamètre, taillée en crémaillère 87 en prise avec un pignon denté 88 solidaire de l'arbre 65 du levier à deux bras 62. Sur le dessin, le levier est représenté dans sa position intermédiaire d'attente déterminée par les deux pistons 83, 84 en positions extrêmes intérieurs.

La tige 85 porte un taquet 94 d'actionnement de trois interrupteurs de fins de course 85, 96, 97 dont les emplacements correspondent, respectivement, à la position de dépose de pièces, à la position de prise de pièces, et à la position intermédiaire d'attente du levier à deux bras 62; ces trois interrupteurs sont reliés à la commande numérique 32 respectivement par trois conducteurs électriques 88, 99, 100. Les deux parties du vérin double 81 sont alimentées par une pompe 89 et mises à la bâche, respectivement, par deux électrovannes 91, 92 placées sous le contrôle de circuits électriques de toute conception classique appropriée, non représentés en détail et désignés dans leur ensemble par 93. La commande de l'ouverture et de la fermeture des pinces 68, 71 du chargeur, ainsi que la commande de serrage et de desserrage du mandrin 4 se font aussi, d'une manière classique, au moyen de vérins hydrauliques dont l'alimentation et la mise à la purge sont assurées par des électrovannes placées aussi sous le contrôle des circuits électriques 93. Ces circuits comportent, d'une manière classique, des contacts électriques de fins de courses propres à provoquer, successivement en cascade, toute la suite de mouvements nécessaires, la fin d'une séquence déclenchant le début de la séquence suivante.

Le fonctionnement de la machine est le suivant: durant une opération d'usinage sur une pièce 5 montée dans le mandrin 4, le chariot porte-chargeur 16 occupe sa position d'attente qui est celle représentée en traits pleins sur la figure 1, à une petite distance seulement de la zone d'usinage, de manière à éviter des déplacements de grande longueur qui seraient une cause de perte de temps; il est immobilisé dans cette position par le verrou 52 (figure 3) engagé dans la gâche 53. Le levier à deux bras 62 du chargeur occupe sa position angulaire intermédiaire qui est celle representée sur les dessins (figures 2 et 4) de manière à ne pas gêner le travail des outils sur la pièce.

A l'instant où l'opération d'usinage en cours de termine, la commande numérique 32 provoque les mouvements suivants: déplacement du chariot porte-outils 1 3 vers la droite jusqu'à ce que ce dernier se trouve exactement en regard du chariot porte-chargeur 16 en position d'attente, dégagement du verrou 52 hors de la gâche 53 et engagement du verrou 41 dans la gâche 42, et déplacement du chariot porte-outils 13 vers la poupée 2 et, par conséquent, également déplacement du chariot porte-chargeur 16 maintenant attelé au chariot porte-outils 13 par le verrou 41. Au cours de ce déplacement, le chariot porte-chargeur 16 actionne l'un des contacts électriques des circuits 93, ce qui provoque le pivotement du levier à deux bras 62 dans le sens inverse de celui de la flèche f (figures 2 et 4) pour l'amener en position angulaire de prise de pièces sous l'effet de la mise à la purge des chambres 82C, 82D du vérin 81 par l'électrovanne 92 et de la mise sous pression de la chambre annulaire correspondante 82A ainsi que de la mise à la purge de la chambre annulaire opposée 82B par l'électrovanne 91. Les deux pistons 83, 84 viennent en butée contre les fonds de cylindre correspondants. Le chariot porte-chargeur 16 pour suit sa course vers la poupée 2 avec la pince 71 du chargeur dans l'axe de la pièce 5A en attente dans la goulotte 72, tandis que l'autre pince 68 est située dans l'axe de la broche de la machine, c'est-à-dire dans l'axe de la pièce usinée 5. 11 arrive un moment où les deux pinces 71 et 68 s'engagent, respectivement, sur la pièce brute 5A et sur la pièce usinée 5, elles se serrent sur ces pièces, par exemple automatiquement sous l'action de ressorts, ou bien sous l'action de vérins commandés par de contacts électriques des circuits 93. A l'instant où le chariot porte-chargeur 16 atteint la fin de sa course vers la poupée, c'est-à-dire sa position de service indiquée en traits interrompus en 16A sur la figure 1, il actionne un interrupteur de fin de course 54 relié, par un conducteur 55, aux circuits électriques de contrôle 93 qui, à leur tour, provoquent le desserrage du mandrin 4. Le desserrage complet du mandrin provoque l'actionnement d'un contact électrique correspondant qui, par un conducteur 8, informe la commande numérique 32; cette dernière provoque alors le recul des chariots 13, 16 sur une longueur suffisante pour que les deux pièces 5A et 5 saisies respectivement par les pinces 71 et 68 du chargeur soient dégagées de la goulotte d'attente 72 et du mandrin 4. A l'instant où le chariot porte-chargeur 16 atteint cette position de dégagement représentée en traits pleins sur la figure 1, il actionne un interrupteur de fin de course 56 relié, par un conducteur 57, aux circuits électriques de contrôle 93 qui provoquent le basculement du levier à deux bras 62 dans le sens de la flèche f (figures 2 et 4) vers sa position de dépose de pièces par la mise à purge de la chambre 82A du vérin 81 par l'électrovanne 91 et la mise à la purge des deux chambres 82C, 82D par l'électrovanne 92, ainsi que la mise sous pression de la chambre 82B par l'électrovanne 91; le piston 84 vient en butée contre le fond de cylindre correspondant pendant que le taquet 94 actionne l'interrupteur de fin de course 95 qui, par le conducteur 98, informe la commande numérique 32 que le levier à deux bras 62 a terminé son mouvement de basculement; la commande numérique provoque maintenant une nouvelle avance des chariots vers la poupée et l'introduction de la piece brute 5A dans le mandrin 4, pendant que la pièce usinée 5 est conduite sur la goulotte d'évacuation 67 et repousse les pièces qui y avaient été déposées précédemment. Lorsque le chariot porte-chargeur 16 atteint de nouveau sa position extrême de service 16A, il actionne le contact électrique 54 qui informe les circuits 93, ce qui provoque l'ouverture des pinces 68 et 71, ainsi que le serrage de mandrin 4. La pièce brute 5A se trouve maintenant serée dans le mandrin 4, tandis que la dernière pièce usinée 5 repose maintenant librement sur la goulotte d'évacuation 67. La fin du serrage du mandrin provoque l'actionnement d'un contact électrique qui, par le conducteur 7, informe la commande numérique 32; cette dernière provoque maintenant le recul des deux chariots jusqu'à la position d'attente du chariot porte-chargeur représentée en 16 en traits pleins sur la figure 1, et l'actionnement du vérin 44 (figure 3) de façon telle que le verrou 41 sorte de la gâche 42 pour désolidariser le chariot porte-chargeur 16 du chariot porte-outils 13, en même temps que le verrou 52 s'engage dans la gâche 53 pour immobiliser le chariot porte-chargeur 16 sur le banc 3. En même temps, l'interrupteur 56 (figure 1) est actionné et informe les circuits de contrôle 93 qui commandent le rappel du levier à deux bras 62 du chargeur en position intermédiaire d'attente représentée sur les dessins par la mise sous pression des chambres extrêmes 82C, 82D du vérin 81 (figure 4) au moyen de l'électrovanne 92. Lorsque le levier à deux bras atteint effectivement sa position intermédiaire, le taquet 94 actionne l'interrupteur 97 qui, par l'intermédiaire du conducteur 100, informe la commande numérique; celle-ci provoque le retour du chariot porte-outils 13 seul à sa position de travail et le départ d'un nouveau cycle d'usinage sur la pièce 5A en place dans le mandrin 4.

On pourrait remplacer les deux interrupteurs de fins de course 54, 56 (figure 1) par des informations introduites dans la commande numérique 32.

Egalement, à titre de variante, le mouvement de pivotement du levier à deux bras 62 du chargeur, l'ouverture et la fermeture des pinces 68, 71, ainsi que le serrage et le desserrage du mandrin 4, au lieu d'être déclenchés en cascade sous le contrôle du système de contacts électriques 93, pourraient être inclus dans le programme de la commande numérique 32 complétée en conséquence à cet effet.

**Revendications**

1. Tour équipé d'une broche rotative horizontale (4) porte-pièce (5), ainsi que d'un premier chariot porte-outils (13) dont les déplacements sont assurés par des organes (26-27-28) placés sous le contrôle d'une commande numérique (32) et d'un second chariot (16) qui porte un dispositif automatique (61) de chargement de pièces à usiner et de déchargement de pièces usinées, ces deux chariots (13-16) étant montés à coulissement sur des glissières horizontales distinctes (11-12-14-15) parallèles à l'axe de la broche rotative horizontale (4) porte-pièce, le second chariot (16) portant un système de verrouillage (41-52) placé sous le contrôle de la commande numérique (32) et adapté pour dans une première position coopérer avec une gâche (42) solidaire du premier chariot (13) pour rendre ce second chariot temporairement solidaire du premier, caractérisé en ce que le système de verrouillage (41-52) est un système à deux positions de verrouillage à commande unique (44) adapté pour coopérer dans la deuxeième position avec une gâche fixe (53) pour immobiliser temporairement le second chariot.

2. Tour suivant la revendication 1, caractérisé en ce que le système de verrouillage (41-52) comporte un vérin à fluide sous pression unique (44) alimenté par l'intermédiaire d'une électro-vanne (47) dont le circuit électrique de commande (48) est relié à la commande numérique (32).

3. Tour suivant la revendication 2, caractérisé en ce que la tige du vérin à fluide sous pression unique (44) du système de verrouillage constitue elle-même un verrou dont une extrémité est adaptée à s'engager directement dans la gâche (42) solidaire du premier chariot et l'autre extrémité adaptée à s'engager directement dans la gâche fixe (53).

**Patentansprüche**

1. Drehmaschine mit einer horizontalen Werkstückhalter-Drehspindel (4), mit einem ersten, einen Werkzeughalter bildenden Schlitten (13), der durch Organe (26-27-28) verschiebbar ist, die unter dem Steuereinfluß einer numerischen Steuerung (32) stehen, und einem zweiten Schlitten (16), der eine automatisch arbeitende Vorrichtung (61) zur Zuführung unbearbeiteter und Abführung bearbeiteter Werkstücke trägt, wobei diese beiden Schlitten (13-16) auf getrennten, parallel zur Achse der horizontalen Werkstückhalter-Drehspindel (4) angeordneten Gleitschienen (11-12-14-15) gleitbar montiert sind, und wobei der zweite Schlitten (16) ein Verriegelungssystem (41-52) trügt, das unter dem Steuereinfluß der numerischen Steuerung (32) steht und derart ausgebildet ist, daß es in einer ersten Position mit einer an dem ersten Schlitten (13) fest angebrachten Raste (41) zusammenwirkt, um den zweiten Schlitten (16) zeitweilig mit dem ersten Schlitten (13) fest zu verbinden, dadurch gekennzeichnet, daß das Verriegelungssystem (41-52) ein System mit zwei Verriegelungspositionen und einer einzigen Antriebsvorrichtung ist, das derart ausgebildet ist, daß es in der zweiten Verriegelungsposition mit einer feststehenden Raste (53) zusammenarbeitet, um den zweiten Schlitten (16) zeitweilig stillzusetzen.

2. Drehmaschine nach Anspruch 1, dadurch gekennzeichnet, daß das Verriegelungssystem (41-52) einen einzigen Druckfluidzylinder (44) besitzt, der über ein Magnetventil (47) gespeist wird, dessen elektrische Steuerschaltung (48) mit der numerischen Steuerung (32) verbunden ist.

3. Drehmaschine nach Anspruch 2, dadurch gekennzeichnet, daß die Kolbenstange des einzigen Druckfluidkolbens des Verriegelungssystems selbst einen Riegel bildet, der mit einem seiner Enden in die an dem ersten Schlitten fest angebrachte Raste (42) und mit dem anderen Ende direkt in die feststehende Raste (53) eingreifen kann.

**Claims**

1. Turning lathe equipped with a horizontal rotary workpiece (5) - holder spindle (4), as well as with a first toolholder carriage (13), the displacements of which are assured by means (26-27-28) subject to numerical control (32) and a second carriage (16) which supports an automatic rough-workpiece-charging and machines-workpiece-discharging device (61), these two carriages (13-16) being mounted for sliding movement on distinctive horizontal slides (11-12-14-15) parallel to the axis of the horizontal rotary workpiece-holder spindle (4), the second carriage (16) supporting a bolt system (41, 52) subject to the control of the numerical control (32), and adapted to cooperate, in a first position, with a keeper (42) integral with the first carriage (13) in order to make the second carriage temporarily fast with the first, characterized in that the bolt system (41, 52) is a two locking positions system having a unique control (44) adapted to cooperate, in the second position with a stationary keeper (53) in order to immobilize temporarily the second carriage.

2. Turning lathe according to claim 1, characterized in that the bolt system (41, 52) comprises a unique pressurized-fluid jack (44) supplied through an electro-valve (47) whereof the electrical control circuit (48) is connected to the numerical control (32).

3. Turning lathe according to claim 2, characterized in that the rod of the unique pressurized-fluid jack (44) of the bolt system constitutes itself a bolt of which an end is adapted to engage directly the keeper (42) integral with the first carriage and of which the other end is adapted to engage directly the stationary keeper (53).

FIG. 1

0 013 848

1

# FIG.2

FIG.3

FIG.4